# EUROPEAN PATENT SPECIFICATION

(11) **EP 1 241 743 B1**
(45) Date of publication and mention of the grant of the patent: **31.05.2006**
(21) Application number: 02005128.0
(22) Date of filing: 07.03.2002
(51) Int. Cl.: H01R 39/16

(54) **Cylindrical commutator and method of manufacturing the same**
Zylindrischer Kommutator und Herstellungsverfahren
Commutateur cylindrique et méthode de fabrication

(30) Priority: 13.03.2001 JP 2001070531; 23.10.2001 JP 2001325102
(43) Date of publication of application: 18.09.2002
(73) Proprietor: Sugiyama Seisakusho Co., LTD., Tokyo (JP)
(72) Inventor: Kamiya, Yoshihisa, c/o Sugiyama Seisakusho Co.,Ltd, Ogasa-gun, Shizuoka-ken (JP); Kato, Hiroyuki, c/o Sugiyama Seisakusho Co.,Ltd, Ogasa-gun, Shizuoka-ken (JP); Kogure, Yoshiyasu, c/o Sugiyama Seisakusho Co.,Ltd, Ogasa-gun, Shizuoka-ken (JP); Ishiwata, Tsutomu, c/o Sugiyama Seisakusho Co.,Ltd, Tokyo (JP); Larson, Gene, c/o Sugiyama Seisakusho Co.,Ltd, Tokyo (JP)
(74) Representative: Grünecker, Kinkeldey, Stockmair & Schwanhäusser Anwaltssozietät

(56) References cited:
- GB-A- 748 893
- US-A- 3 140 414
- US-A- 4 484 389
- US-A- 5 204 574
- US-A- 5 491 373
- US-A- 5 584 115

## Description

The present invention relates to a cylindrical commutator according to the preambles of claims 1 and 2 and to two methods of manufacturing a cylindrical commutator.

US 5 584 115 A describes a method of manufacturing a commutator having commutator pieces each provided with axially extending engagement claws. The commutator further has an intermediate claw and an upper part claw. Hooks extend from one end of respective segments. Claws and grooves are formed on the internal periphery of the segments. Anchors are embedded into a mold resin.

A cylindrical commutator that is used for a compact electric motor comprises a plurality of segments having hooks at one side for line connection, which are fixed cylindrically in a mold resin. Folded anchors are fixing the segments to the mold resin are provided at both ends of the segments, and are embedded into the mold resin.

In the above structure, the segments are fixed to the mold resin with the anchors at both ends. A portion near the center in the axial direction of the segments is not engaged with the mold resin. There are some problems such that the portion near the centers of the segments becomes buoyant above the mold resin during a high speed rotation.

U.S.Patent No. 5,204,574 discloses a cylindrical commutator having anchors also provided at the center portion in the axial direction of the segments. The production process is such; deep grooves and shallow recesses are formed mutually on planar base metal, lands between the grooves and the recesses are prepared by cutting in a V-shape with wedge, thereby to form anchors. As the segments have anchors substantially over their total length, the segments can be connected more certainly in comparison with the case of the said conventional cylindrical commutator.

The above technique has a drawback in that it is possible to form only very low anchors, as the height of the anchors formed is restricted by the height of the ridge. Further, as the cylindrical shape is formed by bending the base metal having the grooves and the recesses, there arise distortions on the cylindrical surface. This leads to a loss of forming precision.

It is an object of the present invention to provide a cylindrical commutator that can be fixedly held using a mold resin and in a high forming precision.

The above and other objects of the invention are achieved by a cylindrical commutator according to claim 1, a cylindrical commutator according to claim 2, a method of manufacturing a cylindrical commutator according to claim 3 and a method of manufacturing a cylindrical commutator according to claim 4.
Fig. 1A is a plan view of a cylindrical commutator which is used for the present invention.
Fig. 1B is a front elevational view of the cylindrical commutator of Fig. 1A.
Fig. 2 is a partial sectional view of a commutator base metal before hooks are bent.
Fig 3A is a plan view of anchors that are prepared by cutting according to a method of the present invention.
Fig. 3B is a plan view of anchors that can be further spread by an anchor-spreading tool.
Fig. 4 is a partial sectional view of a commutator base metal.
Fig. 5 is a partial sectional view of the commutator base metal shown in Fig. 4 in a status that anchors are prepared by cutting according to a method of the present invention.
Fig. 6 is a partial sectional view of the commutator base metal shown in Fig. 5 in a status that the thickness of each hook is divided into two, and the internal periphery side of the divided hook is bent to an internal direction according to a first embodiment of the present invention.

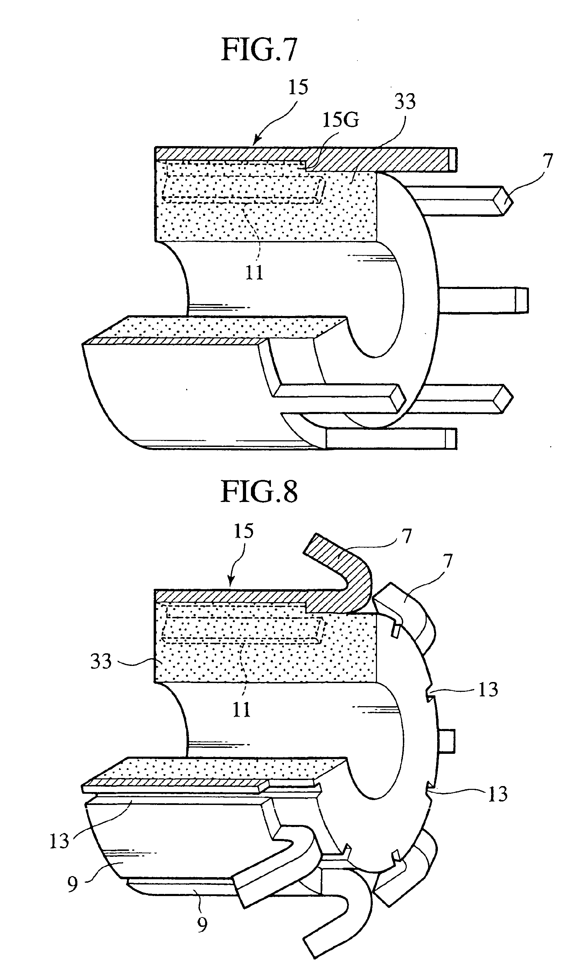

Fig. 7 is a partial sectional view of the commutator base metal in a status that a mold resin is molded inside the base metal, and the mold resin and the commutator base metal are integrated together.
Fig. 8 is a partial sectional view of the mold resin in a status that slits are processed on the external peripheral surface of the mold resin, the slits are divided for each segment, and each hook is bent.
Fig.9 is a partial sectional view of a cylindrical commutator according to a second embodiment of the present invention.
Fig.10 is a partial sectional view of a cylindrical commutator according to a modified example of the second embodiment of the present invention.
Fig.11 is a partial sectional view of a cutting tool for preparing anchors.
Fig.12 is a partial sectional view of an anchor-spreading tool for further spreading the anchors.

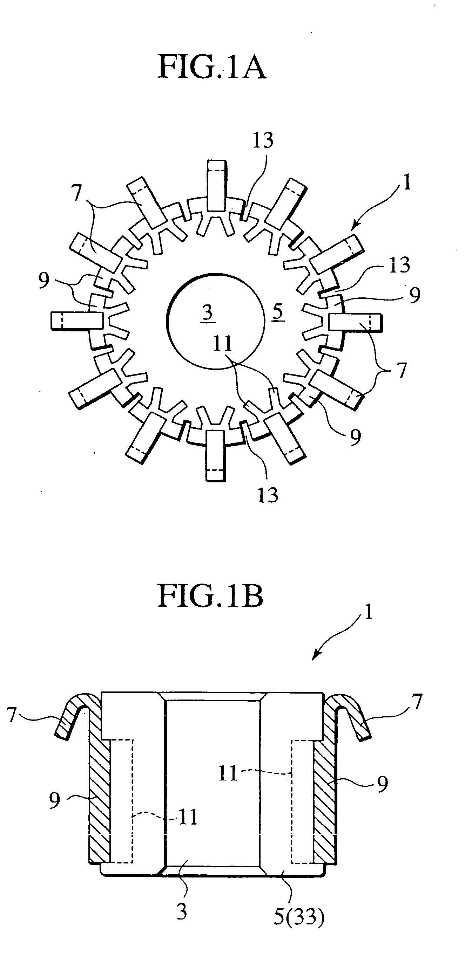

A cylindrical commutator which is used for the present invention is shown in Figs. 1A and 1B and has a cylindrical commutator main body 5 equipped with an engagement hole 3 for engaging a motor shaft on an axial core. The commutator main body 5 consists of a mold resin. On the external peripheral surface of the commutator main body 5, a plurality of segments 9, each having at its one end a hook 7 for connecting with a coil of the motor, are fixedly embedded at equal intervals in a circumferential direction to form a cylindrical shape in total.

Each segment 9 has an anchor 11 over its total length and the anchor 11 is embedded into the mold resin to be fixedly integrated with the mold resin. The anchors 11 are inclined to a diameter direction of the mold resin. Slits 13 are formed at equal intervals on the external peripheral surface of the mold resin, thereby to divide the segments 9.

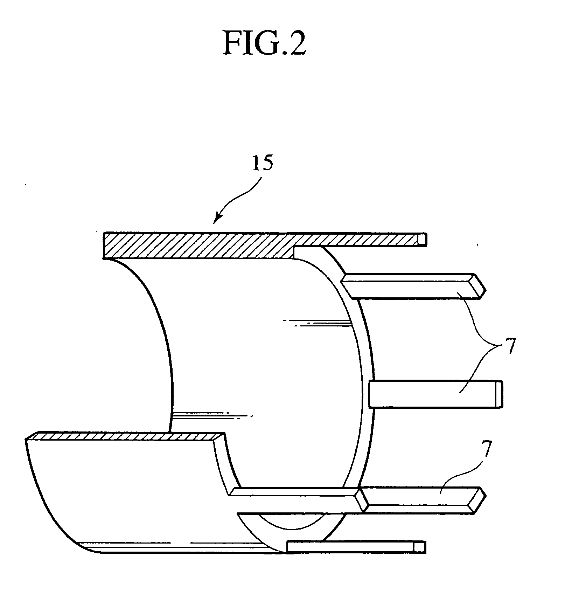

Said commutator 1 is manufactured as follows. First, as shown in Fig. 2, a base metal cylinder 15 is prepared that has linear thin projections 7 at equal intervals at its one end, each projection 7 becoming a hook when it is bent. This cylinder 15 is prepared by, for example, first processing a bar-shaped material into a pipe shape, and then forming the projections 7. Alternatively, a pipe material may be suitably cut to form the thin projections 7. Preferably, a metal plate made of copper or copper alloy is pressed to form a thin portion, and this portion is then sheared into a suitable shape and curled, thereby to form a pipe shape having the projections 7 at one end, as shown in Fig. 2.

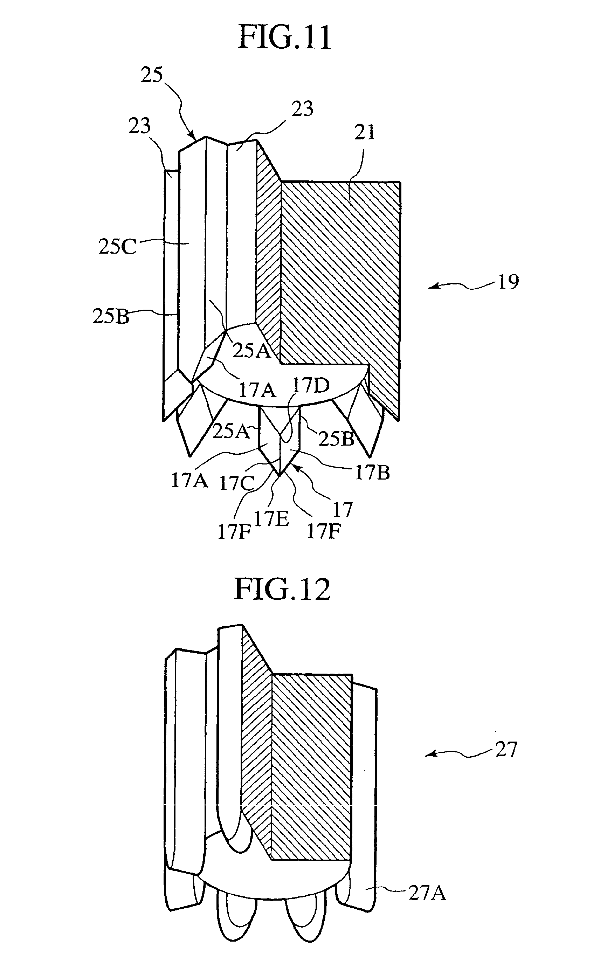

For preparing the anchors by cutting according to a method of the present invention, a cutting tool 19 having sharp cutting edges at equal intervals in the circumferential direction, as shown in Fig. 11, is used. The cutting tool 19 comprises a plurality of grooves 23 at equal intervals in the circumferential direction on a main body 21 thereof, and further comprises a plurality of bars 25 each having a square cross section integrally protruded at equal intervals in the circumferential direction on a main body 21 thereof. The grooves 23 and the bars 25 are aligned alternatively.

The bars 25 are projected from the one end of the main body 21 of the cutting tool 19 and each tip of the bars 25 is formed angled surfaces 17A and 17B which are connected to side walls 25A and 25B of the bar 25 respectively so as to form a cutting edge 17.

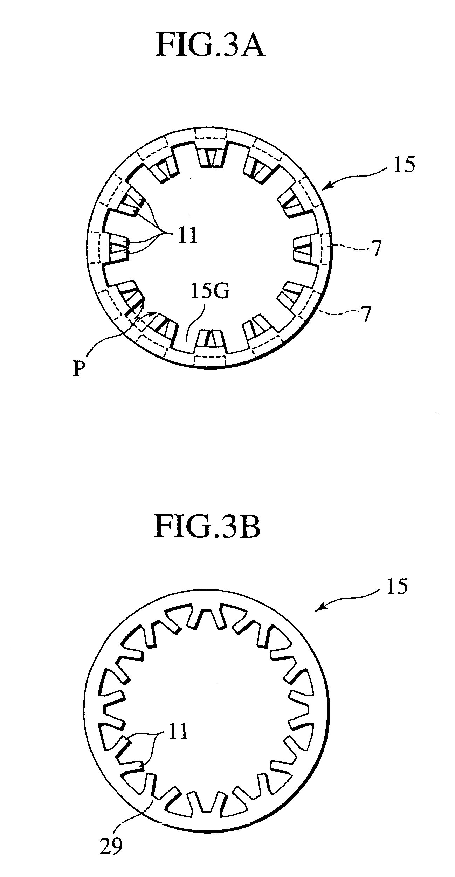

The base metal cylinder 15 is set to a guide mold so that the end portion opposite to the projections 7 is stretched out. The front end 17E of each cutting edge 17 of the cutting tool 19 is brought into contact with an end portion of the cylinder 15. Then, this cutting tool 19 is pressed into the cylinder 15. As a result, as shown in Fig. 3A, the anchors 11 are prepared by cutting at the same time that are arranged at equal intervals in the circumferential direction of the base metal cylinder 15 over substantially the total length of the base metal. As the external portion of the base metal cylinder 15 is protected by the guide mold, the external shape is not deformed by the cutting.

More specifically, the anchors according to a method of the present invention are prepared as follows. The front end of each cutting edge 17 is brought into contact with each of intermediate points P which respectively exist between the adjacent projections 7 shown in Fig. 3A. When cutting tool 19 is pressed into the base metal cylinder 15, a part of the internal peripheral surface of the base metal cylinder 15 is cut in a circumferential direction, thereby to form grooves 15G that are parallel with the axial core. When the grooves 15G are formed, the cuttings are formed in the circumferential direction with the cutting edges. Portions positioned inside the groove 15G are each divided into two. As the cutting tool 19 is further pressed into the base metal cylinder 15, panel-shaped projections are formed toward the inside based on the cutting so as to be anchors 11.

When the number of the segments 9 is small, it is possible to increase the size of intervals between the hooks 7 to increase the cutting height (the size in the diameter direction) of the anchors 11. In other words, it is possible to adjust the height of the anchors 11 embedded into the mold resin, corresponding to the number of segments.

Moreover, it has been explained in the above that the portion positioned inside each groove is divided into two for preparing the anchors 11 by cutting with the cutting edge 17. However, it is also possible to prepare the anchors 11 without dividing the portion into two, depending on the shape of the cutting edges 17E. In this case, as compared with the case of dividing the anchors 11 into two, it is possible to prepare the anchors 11 having a larger size of a cutting height.

It is possible to further spread the anchors 11, as shown in Fig. 3B, based on the insertion of an anchor-spreading tool 27 shown in Fig. 12. The anchor-spreading tool 27 has a resembled shape as the cutting tool 19 and equivalent portions as the cutting edges 17E of the cutting tool 19 are formed curved surfaces, which are anchor-spreading portions 27A. The anchor spreading portions 27A are inserted and pressed into between the anchors 11 to widen the intervals between the anchors 11. In this way, it is possible to further widen the interval between each pair of anchors 11.

In this case, a root 29 of a large thickness having a pair of anchors 11 has a dovetail shape in a status that the anchors are prepared by cutting and spreading. In a status that the anchors are embedded into the mold resin, the engagement between the commutator and the mold resin is similar to a dovetail junction. However, according to the present embodiment, the anchors 11 having a larger cutting are provided over substantially the total length. Therefore, as compared with the case where a simple dovetail junction is formed, it is possible to increase the size of the anchors that are embedded into the mold resin. As a result, it is possible to achieve a more secure integration between the mold resin and the segments.

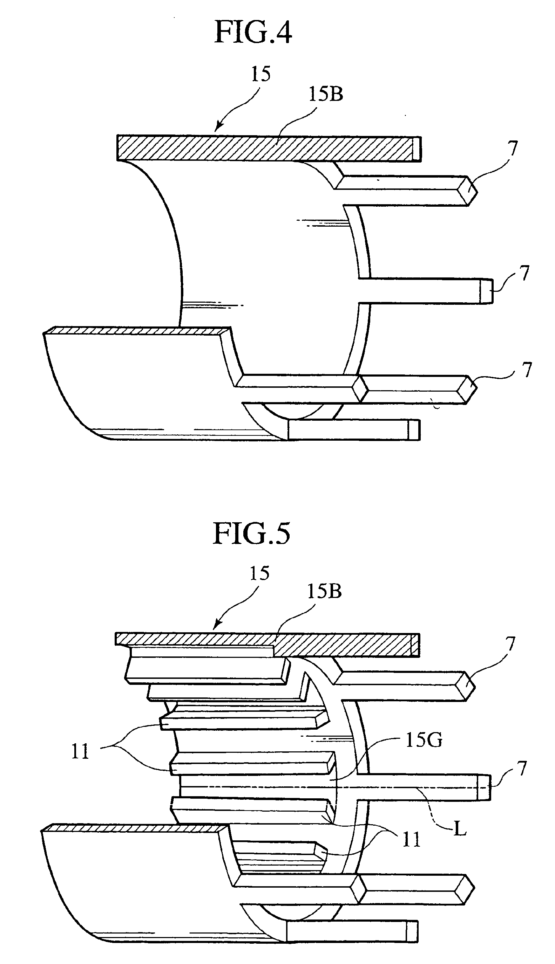

It has been explained in the above that the thickness of the hooks 7 is smaller than the thickness of the main body portion of the base metal cylinder 15. Alternatively, it is also possible to have such a structure that the thickness of the hooks 7 is equal to the thickness of a main body portion 15B of the cylinder 15 as shown in Fig. 4. In this case, it is also possible to form the anchors 11 by cutting by forming the grooves 15G with the cutting tool over substantially the total length at portions between the hooks 7 on the internal peripheral surface of the cylinder 15, as described above.

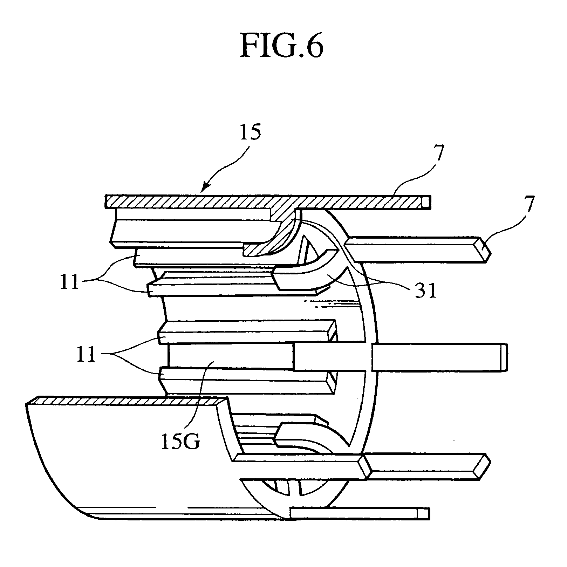

According to the present invention the center of the groove 15G formed by the cutting tool and the center of the hook 7 coincide with each other along a line L as shown in Fig. 5. The groove 15G is not formed over substantially the total length of the main body portion 15B of the cylinder 15, but is formed up to a position near the end of the hook 7. Then, as shown in Fig. 6, the thickness of each hook 7 is cut into two, and the inside portion is bent to face the groove 15G to form an anchor 31 according to a first embodiment of the present invention.

As described above, the thickness of each hook 7 is divided into two, and the anchor 31 is formed inside. With this arrangement, it is possible to form the anchor 31 to have a relatively long and large size. As a result, it is possible to provide a structure that has both the anchors 11 that extend over substantially the total length of the main body portion 15B of the cylinder 15 and the long and large anchors 31 that are bent from one end of the main body portion 15B toward the inside. Consequently, it is possible to achieve a more secure fixing of the segments to the mold resin. The anchors 31 are not the elements that are always necessary, and they may be formed according to the needs.

As described above, the anchors 11 are formed over substantially the total length of the internal peripheral surface of the cylinder 15 that has a plurality of linear hooks 7 at one end. Then, the cylinder 15 is set to the molding die. The mold resin 33 is molded to form the commutator main body 5, and at the same time, the mold resin 33 and the cylinder 15 are integrated together.

After the mold resin 33 and the cylinder 15 have been integrated together, the slits 13 are processed at equal intervals on the external peripheral surface of the cylinder 15, as described above. Therefore, the cylinder 15 is divided into the segments 9. Further, the hooks 7 are bent to the external direction. As a result, the commutator 1 as shown in Fig. 1 is obtained, which is not a subject of the invention.

As can be understood from the above, it is possible to form the base metal cylinder 15 by processing a round-bar shaped material or a round-pipe shaped material into a hollow cylindrical shape. It is also possible to form the cylinder 15 by processing a plate material into a cylindrical shape. After the base metal has been formed into a cylindrical shape of high precision, the anchors are prepared by cutting. Then, the anchors are embedded into the mold resin 33, and the cylinder 15 is divided into the segments 9, while maintaining the precision of the external shape of the cylinder. Therefore, it is possible to form the commutator 1 in high precision. It is also possible to increase the cutting height of the anchors 11 according to the number of poles of the motor. As a result, it is possible to achieve a more secure integration of the segments into the mold resin.

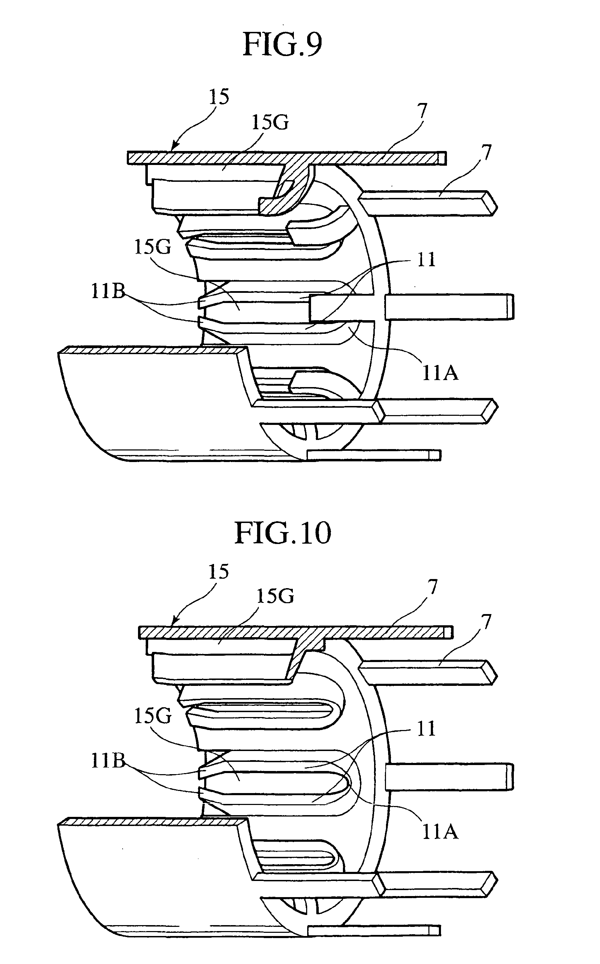

As described above, a pair of anchors 11 are formed on both sides of each groove 15G. According to a second embodiment of the present invention shown in Fig.9 and Fig.10, a pair of anchors 11 are connected at a connection portion 11A on the edge of each groove 15G near each hook 7. Furthermore, opposite edges of the anchors 11 are slanted so that the slanted portion 11B opens or closes each groove 15G.

The connection portions 11A and the slanted portions 11B of the anchors 11 effectively resist a load which act on the segments 9 in an axial direction after the anchors 11 are embedded in and integrated with the mold resin 33, because the pair of anchors 11 are connected at one end of each groove 15G and the other ends of the anchors 11 are slanted as described above. A load in an axial direction caused from a tension of a coil connected with the hook 7 acts on the segments 9 in case that the motor rotates in high speed, the second embodiment of the present invention makes it possible to manufacture the rigid structure of the cylindrical commutator effective to such an axial directed load.

## Claims

1. A cylindrical commutator comprising:
a plurality of mutually insulated segments (9) arranged at equal intervals on the external periphery of a cylindrical surface;
hooks (7) for line connection extending from one end of respective segments (9); land and grooves (15G) parallel with an axial core formed on the internal periphery of the segments (9);
anchors (11) extending from the edges of the land over substantially the total length of the segments (9);
a mold resin (33) into which the anchors (11) are to be embedded to fix the segments (9) in a cylindrical shape; and
undercuts (13) formed on the mold resin (33) for separating the segments (9), **characterised in that** a pair of anchors (11) on both sides of each groove (15G) are connected with each other at the end of the groove (15G) on the side near the hooks (7) and are slanted to the groove (15G) at the other end of the groove (15G).

2. A cylindrical commutator comprising:
a plurality of mutually insulated segments (9) arranged at equal intervals on the external periphery of a cylindrical surface;
hooks (7) for line connection extending from one end of respective segments (9); land and grooves (15G) parallel with an axial core formed on the internal periphery of the segments (9);
anchors (11) extending from the edges of the land over substantially the total length of the segments (9);
a mold resin (33) into which the anchors (11) are to be embedded to fix the segments (9) in a cylindrical shape; and
undercuts formed on the mold resin (33) for separating the segments (9),
**characterised in that** the cylindrical commutator further comprises second anchors (31) wherein the thickness of each hook (7) is divided into two, and the internal side of the divided hook (7) is bent toward the inside so as to be the second anchor (31).

3. A method of manufacturing a cylindrical commutator according to claim 1, comprising the steps of:
cutting an internal peripheral surface of a cylinder of base material (15) having a plurality of hooks (7) at a first end of the cylinder from a second end toward the first end so as to form pairs of anchors (11) connected with each other at ends of anchors (11) near the first end corresponding to the hooks (7) in a circumferential direction;
setting the cylinder(15) to a molding die, and embedding the anchors (11) into the mold resin (33); and
dividing the hook (7) and the anchor (11) for each segment (9) by processing slits (13) at equal intervals in a circumferential direction on the external peripheral surface of the mold resin (33).

4. A method of manufacturing a cylindrical commutator according to claim 2, comprising the steps of:
cutting an internal peripheral surface of a cylinder of base material (15) having a plurality of hooks (7) at one end so as to form anchors (11) corresponding to the hooks (7) in a circumferential direction;
dividing the thickness of each hook (7) into two and bending the internal portion of the divided hook (7) toward the inside to form a second anchor (31);
setting the cylinder (15) to a molding die, and embedding the anchors (11) and the second anchors (31) into the mold resin (33); and
dividing the hook (7) and the anchor (11) for each segment (9) by processing slits (13) at equal intervals in a circumferential direction on the external peripheral surface of the mold resin (33).

## Patentansprüche

1. Zylindrischer Kollektor, der umfasst:
eine Vielzahl voneinander isolierter Segmente (9), die in gleichmäßigen Abständen am Außenumfang einer zylindrischen Fläche angeordnet sind;
Haken (7) zur Leitungsverbindung, die sich von einem Ende entsprechender Segmente (9) erstrecken;
Steg und Nuten (15G) parallel zu einem axialen Kern, die am Innenumfang der Segmente (9) ausgebildet sind;
Anker (11), die sich von den Rändern des Stegs über im Wesentlichen die gesamte Länge der Segmente (9) erstrecken;
ein Formharz (33), in das die Anker (11) einzubetten sind, um die Segmente (9) in einer zylindrischen Form zu fixieren; und
Unterschnitte (13), die an dem Formharz (33) ausgebildet sind, um die Segmente (9) zu trennen,
**dadurch gekennzeichnet, dass** ein Paar Anker (11) auf beiden Seiten jeder Nut (15G) miteinander am Ende der Nut (15G) an der Seite in der Nähe der Haken (7) verbunden sind und zu der Nut (15G) am anderen Ende der Nut (15G) geneigt sind.

2. Zylindrischer Kollektor, der umfasst:
eine Vielzahl voneinander isolierter Segmente (9), die in gleichmäßigen Abständen am Außenumfang einer zylindrischen Fläche angeordnet sind;
Haken (7) zur Leitungsverbindung, die sich von einem Ende entsprechender Segmente (9) erstrecken;
Steg und Nuten (15G) parallel zu einem axialen Kern, die am Innenumfang der Segmente (9) ausgebildet sind;
Anker (11), die sich von den Rändern des Stegs über im Wesentlichen die gesamte Länge der Segmente (9) erstrecken;
ein Formharz (33), in das die Anker (11) einzubetten sind, um die Segmente (9) in einer zylindrischen Form zu fixieren; und
Unterschnitte, die an dem Formharz (33) ausgebildet sind, um die Segmente (9) zu trennen,
**dadurch gekennzeichnet, dass** der zylindrische Kollektor des Weiteren zweite Anker (31) umfasst, wobei die Dicke jedes Hakens (7) zweigeteilt ist und die Innenseite des geteilten Hakens (7) zur Innenseite hin gebogen ist, so dass sie der zweite Anker (31) ist.

3. Verfahren zum Herstellen eines zylindrischen Kollektors nach Anspruch 1, das die folgenden Schritte umfasst:
Schneiden einer Innenumfangsfläche eines Zylinders aus Grundmaterial (15), der eine Vielzahl von Haken (7) an einem ersten Ende des Zylinders hat, von einem zweiten Ende auf das erste Ende zu, um so Paare von Ankern (11), die miteinander an Enden der Anker (11) verbunden sind, in der Nähe des ersten Endes, entsprechend den Haken (7) in einer Umfangsrichtung auszubilden;
Einsetzen des Zylinders (15) in eine Spritzgießform und Einbetten der Anker (11) in das Formharz (33); und
Teilen des Hakens (7) und des Ankers (11) für jedes Segment (9) durch Herstellen von Schlitzen (13) in gleichmäßgien Abständen in einer Umfangsrichtung an der Außenumfangsfläche des Formharzes (33).

4. Verfahren zum Herstellen eines zylindrischen Kollektors nach Anspruch 2, das die folgenden Schritte umfasst:
Schneiden einer Innenumfangsfläche eines Zylinders aus Grundmaterial (15), der eine Vielzahl von Haken (7) an einem Ende hat, um Anker (11) entsprechend den Haken (7) in einer Umfangsrichtung auszubilden;
Zweiteilen der Dicke jedes Hakens (7) und Biegen des inneren Abschnitts des geteilten Hakens (7) zur Innenseite hin, um einen zweiten Anker (31) auszubilden;
Einsetzen des Zylinders (15) in eine Spritzgießform und Einbetten der Anker (11) sowie der zweiten Anker (31) in das Formharz (33); und
Teilen des Hakens (7) und des Ankers (11) für jedes Segment durch Herstellen von Schlitzen (13) in gleichmäßigen Abständen in einer Umfangsrichtung an der Außenumfangsfläche des Formharzes (33).

## Revendications

1. Commutateur cylindrique comprenant :
une pluralité de segments mutuellement isolés (9) disposés à intervalles égaux sur la périphérie extérieure d'une surface cylindrique ;
des crochets (7) pour une connexion en ligne s'étendant à partir d'une extrémité des segments respectifs (9) ;
des rainures (15G) parallèles à un noyau axial formé sur la périphérie intérieure des segments (9) ;
des moyens d'ancrage (11) s'étendant depuis les bords de la rainure sur sensiblement la longueur totale des segments (9) ;
une résine de moulage (33) dans laquelle les moyens d'ancrage (11) doivent être intégrés pour fixer les segments (9) dans une forme cylindrique ; et
des gorges (13) formées sur la résine de moulage (33) destinées à séparer les segments (9),
**caractérisé en ce qu'**une paire de moyens d'ancrage (11) des deux côtés de chaque rainure (15G) sont reliés l'un à l'autre au niveau de l'extrémité de la rainure (15G) du côté proche des crochets (7) et sont inclinées par rapport à la rainure (15G) au niveau de l'autre extrémité de la rainure (15G).

2. Commutateur cylindrique comprenant :
une pluralité de segments mutuellement isolés (9) disposés à intervalles égaux sur la périphérie extérieure d'une surface cylindrique ;
des crochets (7) pour une connexion en ligne s'étendant à partir d'une extrémité des segments respectifs (9) ;
des rainures(15G) parallèles à un noyau axial formé sur la périphérie intérieure des segments (9) ;
des moyens d'ancrage (11) s'étendant depuis les bords de la rainure sur sensiblement la longueur totale des segments (9) ;
une résine de moulage (33) dans laquelle les moyens d'ancrage (11) doivent être intégrés pour fixer les segments (9) dans une forme cylindrique ; et
des gorges formées sur la résine de moulage (33) destinées à séparer les segments (9),
**caractérisé en ce que** le commutateur cylindrique comprend en outre des seconds moyens d'ancrage (31) dans lesquels l'épaisseur de chaque crochet (7) est divisée en deux, et le côté intérieur du crochet divisé (7) est plié vers l'intérieur afin d'être le second moyen d'ancrage (31).

3. Procédé de fabrication d'un commutateur cylindrique selon la revendication 1, comprenant les étapes consistant à :
découper une surface périphérique intérieure d'un cylindre d'un matériau de base (15) ayant une pluralité de crochets (7) au niveau d'une première extrémité du cylindre depuis une seconde extrémité vers la première extrémité de manière à former des paires de moyens d'ancrage (11) reliés les unes aux autres au niveau des extrémités des moyens d'ancrage (11) à proximité de la première extrémité correspondant aux crochets (7) dans une direction circonférentielle ;
monter le cylindre (15) sur une filière de moulage et intégrer les moyens d'ancrage (11) dans la résine de moulage (33) ; et
diviser le crochet (7) et le moyen d'ancrage (11) pour chaque segment (9) en traitant des fentes (13) à intervalles égaux dans une direction circonférentielle sur la surface périphérique extérieure de la résine de moulage (33).

4. Procédé de fabrication d'un commutateur cylindrique selon la revendication 2, comprenant les étapes consistant à :
découper une surface périphérique intérieure d'un cylindre d'un matériau de base (15) ayant une pluralité de crochets (7) au niveau d'une première extrémité de manière à former des moyens d'ancrage (11) correspondant aux crochets (7) dans une direction circonférentielle ;
diviser l'épaisseur de chaque crochet (7) en deux et plier la partie intérieure du crochet divisé (7) vers l'intérieur de manière à former un second moyen d'ancrage (31) ;
monter le cylindre (15) sur une filière de moulage et intégrer les ancres (11) et les secondes ancres (31) dans la résine de moulage (33) ; et
diviser le crochet (7) et le moyen d'ancrage (11) pour chaque segment (9) en réalisant des fentes (13) à intervalles égaux dans une direction circonférentielle sur la surface périphérique extérieure de la résine de moulage (33).
